Europäisches Patentamt

European Patent Office

Office européen des brevets

(11) Publication number: **0 385 520**
**A1**

## (12) EUROPEAN PATENT APPLICATION

(21) Application number: 90200215.3

(22) Date of filing: 30.01.90

(51) Int. Cl.⁵: **A01G 25/09**

(30) Priority: 03.03.89 IT 4681689

(43) Date of publication of application:
**05.09.90 Bulletin 90/36**

(84) Designated Contracting States:
**AT BE CH DE DK ES FR GB GR IT LI LU NL SE**

(71) Applicant: **IRRIMEC ITALIANA S.p.A.**
**Via Ancona, 27 - Zona Industriale**
**I-29010 Calendasco (Piacenza)(IT)**

(72) Inventor: **Turion, Jean Claude**
**165, Chemin des Amandiers**
**Castelnau-le-Lez(FR)**

(74) Representative: **Corradini, Corrado**
**Studio Ing. C. CORRADINI & C. S.r.l. 4, Via**
**Dante Alighieri**
**I-42100 Reggio Emilia(IT)**

(54) Control device for drive units for the hose winding drum of self-propelled irrigation sprinklers.

(57) A control device for drive units for the hose winding drum of self-propelled irrigation sprinklers comprises a slide valve (8) the stem (88) of which is connected to the mobile member of a variable-volume chamber (7) which rotates the hose winding drum of the sprinkler stepwise. The slide valve is provided with an inlet port and two outlet ports, and is arranged to alternately occupy during irrigation a first position in which it enables pressurised water to be fed to said chamber, and a second position in which said chamber is connected to discharge. The casing or, respectively, the stem of the slide valve is arranged to move relative to the stem or, respectively, to the casing independently of the to-and-fro movement of said stem, so that the slide valve can assume two configurations, one of which enables the chamber (7) to be intermittently fed with pressurised water, and the other keeps this latter constantly connected to discharge.

FIG.1

This invention relates in a totally general manner to self-propelled irrigation sprinklers, and more particularly to a device for controlling the drive means provided for rotating the hose winding drum.

In the modern irrigation of large ground areas it is known to use, inter alia, self-propelled irrigation sprinklers comprising a wheel-mounted frame on which there is positioned a rotatable horizontal drum carrying a long irrigation water feed hose wound in several superposed layers.

The free end of said hose is connected to a sprinkler mounted on a skid or trolley, the hose being fed through the drum hub by way of a rotatable seal joint.

In such known sprinklers, the said irrigation water is used via hydraulic motor means to slowly rotate the drum in order to wind the hose while at the same time pulling the skid or trolley towards the drum support frame.

One of the most widely used systems for rotating the drum, to which the invention relates in particular, comprises a variable-volume hydraulic chamber, such as a single-acting cylinder-piston unit or a bellows, which is used to oscillate a member which directly or indirectly rotates the drum.

In such known systems the intermittent feed of pressurised water to said cylinder-piston unit or bellows is usually effected by a three-way valve unit which comprises an inlet port and two outlet ports.

In addition, the valve unit is linked to the motor unit (cylinder-piston unit or bellows) in such a manner as to occupy a first position in which the inlet port communicates with the outlet port connected to the motor unit, and a second position in which the two outlet ports are connected together, the motor unit then being connected to discharge.

A system of this type is described in European patent No. 0105013, to which reference should be made for further details.

In such configurations the problem of properly interrupting and then restarting the hydraulic motor feed when the hose has been completely rewound and when a new irrigation cycle is to be commenced has not been conveniently solved. Such known systems have also proved relatively unreliable, enhanced by the fact that irrigation water often contains relatively large quantities of impurities and other foreign bodies.

Basically, experience has shown that the valve units used up to the present time are extremely sensitive to said impurities, with the result that the corresponding valving members can be subject both to liquid seepage and to blockage within their respective seats.

In the first case irregularities occur in the rotation of the drum whereas in the second case this latter stops rotating.

Moreover, such known units are relatively complicated and bulky, and therefore also particularly costly.

The main object of the present invention is to provide a control device which obviates the aforesaid within the context of a reliable and simple structure of small overall size.

According to the invention the intermittent water feed to the hydraulic unit which drives the drum is effected via a three-way valve which is formed in such a manner as to be practically insensitive to any impurities present in the irrigation water.

Specifically, said three-way valve consists of a slide valve, the stem of which is connected to the hydraulic unit (cylinder-piston unit or bellows) so as to move alternately between a first position in which it allows pressurised water to enter said unit, and a second position in which it connects this latter to discharge.

Moreover according to the invention the casing or, respectively, the stem of said slide valve is arranged to move independently relative to the stem or casing respectively, without influence by the to-and-fro movement of said stem, in order to deactivate and reactivate the slide valve.

This is attained by means which sense the proximity of the sprinkler to the drum at the end of an irrigation stage, and arrange said casing and stem in a position in which the hydraulic unit is constantly connected to discharge, with consequent stoppage of the drum.

According to a first embodiment, this can be obtained by allowing the slide valve casing to slide relative to the stem, and providing a lever system which during irrigation keeps the casing in the position in which intermittent feed to the hydraulic unit can take place, whereas on termination of irrigation it shuts off this latter by sliding the casing relative to the stem.

According to a further embodiment the slide valve stem is constructed in two parts connected together by a screw-nut linkage operated by a reversible motor, and by which the active part of the stem which is within the slide valve can be moved relative to the casing.

The characteristics and constructional merits of the invention will be apparent from the detailed description given hereinafter by way of example with reference to the accompanying figures, which illustrate two preferred embodiments thereof.

Figure 1 is a schematic side elevational view showing a hose winding drum of a self-propelled irrigation sprinkler fitted with the device of the invention.

Figure 2 is a longitudinal section through the device of the invention.

Figure 3 is a side view of a first embodiment of the invention in the position in which it feeds the drum drive unit.

Figure 4 is a view in the direction IV of Figure 3.

Figure 5 is a view similar to that of Figure 3, but with the invention shown in the position in which it interrupts feed to the drum drive unit.

Figure 6 is a longitudinal section through a second embodiment of the means for activating/deactivating the invention.

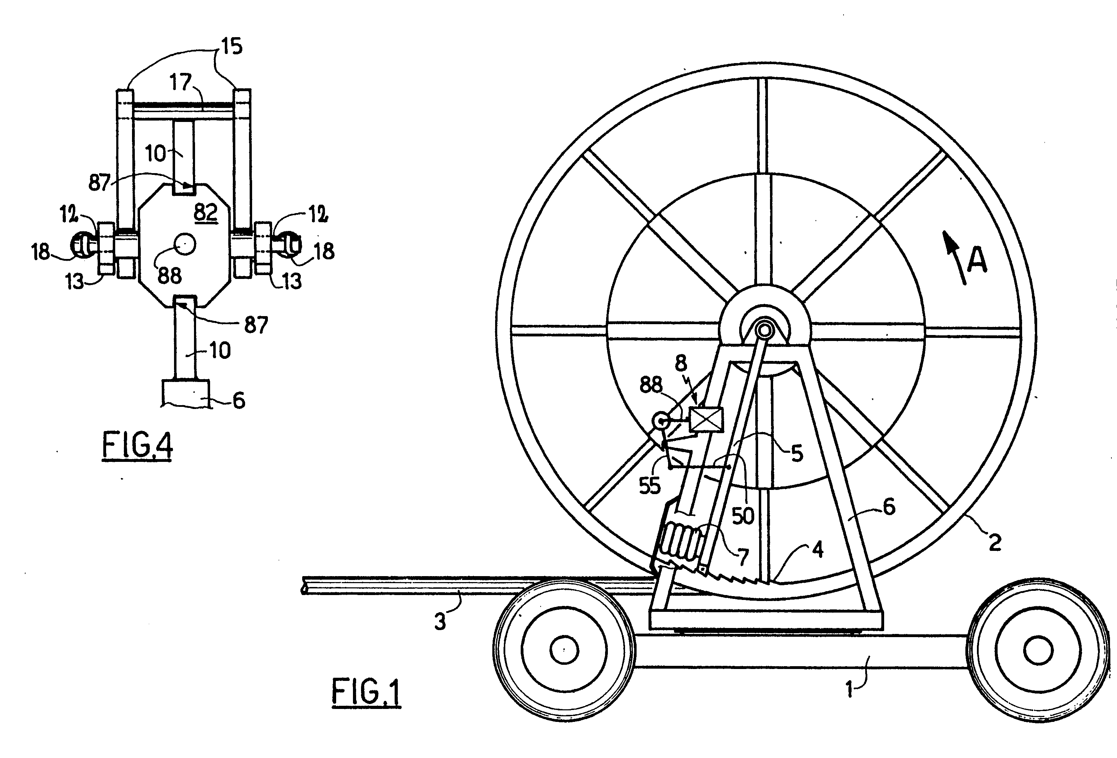

Said figures, and in particular Figure 1, show a trolley 1 on which a rotatable drum 2 of horizontal axis is disposed.

An irrigation feed water hose 3 is wound in several superposed helical layers about the drum 2. The hose 3 is connected to a sprinkler mounted on a skid or trolley, not shown as they are of known type, the irrigation water being fed to the hose 3 via one of the drum end supports by way of a usual rotatable seal joint.

No further constructional details of the trolley 1 are described as they do not form part of the present invention.

The drum 2 is provided peripherally with a toothed ring 4 with which there engages a ratchet mechanism, for example in the form of a pawl located at the lower end of a lever 5 which at it top is pivoted to one of the sidepieces 6 which support the drum 2.

The lever 5 is caused to swing in a vertical plane by a hydraulic control unit of known type, which in the case shown is in the form of a hydraulic bellows chamber 7.

The intermittent feed of pressurised water to the bellows 7 effected via a three-way valve 8 which is described in detail hereinafter.

In the usual manner, by virtue of the swing movement of said lever 5 the drum is caused to rotate stepwise in the direction A (see Figure 1) with simultaneous rewinding of the hose 3 and dragging of the sprinkler. There is also pivoted to said lever 5 a second lever 50 which is pivoted to the lower end of a rocker lever 55, the other end of which is pivoted to a stem 88 which is slidingly received within the casing of the valve 8.

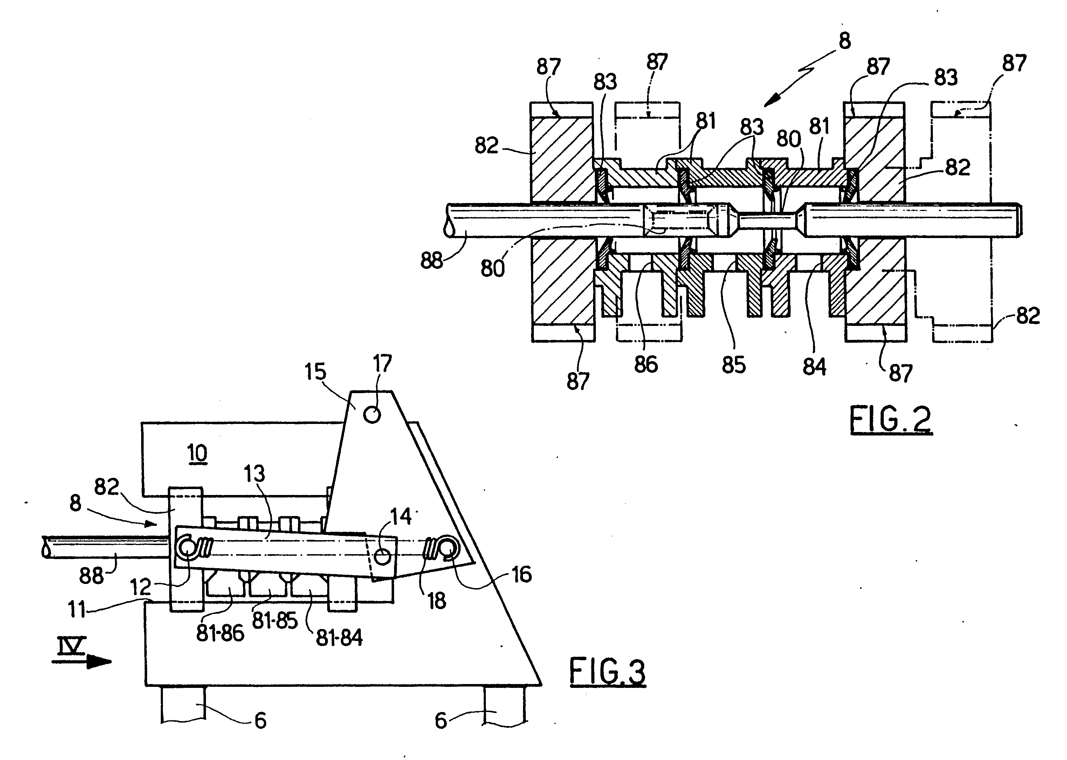

As can be seen in Figure 2, said valve 8 is in the form of a slide valve and comprises three identical annular members 81 clamped together between two endpieces 82.

Between said members 81 and endpieces 82 there are clamped four annular lip gaskets 83 which seal against the stem 88 and with which they define three annular chambers. The first member (to the right in Figure 2) of said three comprises an inlet port 84 to be connected to the pressurised water source, the second member comprises an outlet port 85 to be connected to the bellows 7 and the third member comprises an outlet port 86 through which the water present in the bellows 7 is discharged.

Finally, on the stem 88 there is a circumferential groove 80 which during irrigation is arranged to occupy the two operating positions which are indicated in Figure 2 by full lines and dashed and dotted lines respectively.

In said first position (to the right in Figure 2) the two ports 84 and 85 are connected together, so that the pressurised water reaches the bellows 7 and causes it to extend, whereas in the second position the two ports 85 and 86 are connected together so that the bellows 7 discharges, ie shortens.

These filling and emptying stages follow each other in the aforesaid manner until the sprinkler has reached a position in proximity to the trolley, at which the drum rotation must be stopped.

To attain this stoppage, in accordance with a first embodiment shown in Figures 3 to 5 the casing of the sprinklers 8 is slidingly mounted on a profiled plate 10 fixed in such a manner as to be able to slide relative to the stem 88 independently of the to-and-fro movement of this latter.

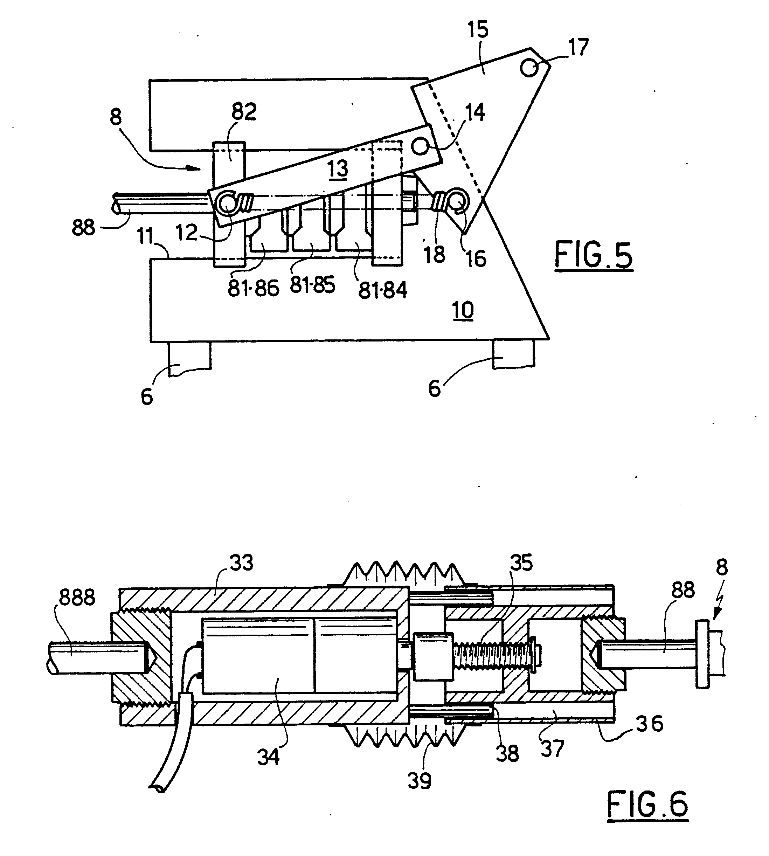

Specifically, said plate 10 comprises a rectangular aperture 11 open at one end into which the casing is inserted, the endpieces 82 being slidingly engaged with the sides of said aperture 11 via respective pairs of opposing grooves 87 (see Figures 2, 4).

Two opposing lateral connecting bars 13 are pivoted at 12 to that endpiece 82 close to the open end of said aperture, and are pivoted at 14 to respective lateral shaped levers 15. These latter are pivoted to the plate 10 on a common transverse pin 16 and are upperly connected together by a transverse rod 17.

Between two said pivots 12 and 16 there is provided at least one tension spring 18, said three pivots 12, 16 and 14 being positioned such that the intermediate pivot 14 can lie either below centre or above centre, as shown in Figures 3 and 5.

In the operating position of Figure 3, the rod 17 rests on the plate 10 where it is maintained by the spring 18, the slide valve casing is spaced apart from the blind end of the aperture 11, and the slide valve operates in the aforesaid manner.

When the sprinkler arrives in proximity to the drum support trolley, by means of a suitable appendix (not shown) it causes the levers 15 to swivel in a clockwise direction, so that the casing of the slide valve 8 slides towards the right (see Figure 5) through a distance practically equal to one outward or return stroke of the stem 88 during irrigation. In this position the slide valve casing and stem rest against the blind end of the aperture 11, the groove 80 in the stem 88 keeps the two outlet ports 85 and 86 constantly connected together and the bellows 7 is not fed.

For the next irrigation stage the sprinkler is returned to the end of the strip of ground to be irrigated, after which the casing is rearranged as shown in Figure 3, by which the two ports 84 and 85 are connected together (see Figure 2).

It should be noted that in Figure 2 the lines comprising dashes and two dots indicate the position of the slide valve casing when the slide valve of the first embodiment heretofore described is deactivated.

In the embodiment shown in Figure 6, to deactivate the slide valve 8 the stem 88 is caused to slide relative to the slide valve casing independently of the to-and-fro movement to which it is subjected during irrigation.

For this purpose that end of the stem 88 located outside the casing of the slide valve 8 is connected to a second stem 888 by way of a screw-nut device.

With reference to Figure 6, said second stem 888 is intended to be connected at one end to the described rocker lever 55 (Figure 1), whereas at its other end it is provided with a sleeve 33. In the sleeve 33 there is housed and conveniently fixed a reversible electric motor 34, the drive shaft of which extends beyond said sleeve, where it carries a threaded pin 35 fixed to it.

The pin 35 is engaged with a corresponding thread provided within a bush 36, this latter being fixed to the stem 88 of the slide valve 8. Said bush 36 is torsionally engaged with said sleeve 33 by way of at least one longitudinal cylindrical bore 37 in which a pin 38 is slidingly received. Finally, a protection bellows 39 is provided between said sleeve 33 and bush 36.

During irrigation the bush 36 is in the illustrated position, with the slide valve 8 activated.

Again in this case its deactivation is controlled by the sprinkler trolley which, by way of the said appendix or equivalent means, closes the contacts of the power circuit of the motor 34. This latter rotates for a predetermined time period sufficient to draw the bush 36 through a distance practically equal to one outward or return stroke of the stem 88 during irrigation, after which it stops, with the stem groove 80 keeping the slide valve ports 85 and 86 connected together (Figure 2).

For the next irrigation stage the sprinkler trolley is returned to the end of the strip of ground to be irrigated, after which the motor 34 is rotated in the reverse direction to cause said groove 80 in the stem 88 to connect the slide valve ports 84 and 85 together (see Figure 2).

It should finally be noted that the particular conformation of the invention (see Figure 2) enables it to operate perfectly even if particularly impure water is present.

The invention is not limited only to the embodiments described and illustrated, but includes all technical equivalents of the aforesaid means and their combinations, if implemented within the context of the following claims.

## Claims

1. A control device for drive units for the hose winding drum of self-propelled irrigation sprinklers in which the drum (2) is rotated stepwise by a variable-volume hydraulic chamber (7), the intermittent feed to which is controlled by a three-way valve which comprises an inlet port (84) and two outlet ports (85), (86) and is arranged to alternately occupy a first position in which it enables the pressurised water to reach said chamber, and a second position in which it connects said chamber to discharge, characterised in that said three-way valve comprises a slide valve (8) the stem (88) of which is connected to the mobile member controlled by said chamber, the casing (82) or, respectively, the stem (88) of the slide valve (8) being arranged to move relative to the stem or casing respectively, independently of the to-and-fro movement of said stem, to arrange the slide valve in an active configuration in which it allows pressurised water to be intermittently fed to said chamber, and in an inactive configuration in which said chamber is continuously connected to discharge.

2. A device as claimed in claim 1, characterised in that the three operational chambers of said slide valve are defined by annular lip gaskets (83) which are clamped between a series of members (81, 82) defining the casing of said slide valve.

3. A device as claimed in claim 1, characterised in that said independent movement of the casing relative to the slide valve stem is enabled by a slide and guide member (10) for said casing and a pair of levers (13), (15) which are pivoted to each other at one end, their other ends being pivoted to said casing and to said member respectively, the axis on which said pair of levers are pivoted to each other being able to occupy two positions, one below and the other above the line joining the other two pivots, said two positions being established by an elastic member (18).

4. A device as claimed in claim 1, characterised in that for the independent movement of the stem relative to the slide valve casing there is provided a second stem (888) aligned with the preceding (88), their facing ends being connected together by a screw-nut device, of which the screw (35) is rotated by a reversible electric motor (34) and the nut (36) is torsionally locked.

FIG.4

FIG.1

EP 0 385 520 A1

FIG.2

FIG.3

EP 0 385 520 A1

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2614172 (BLETTON)<br>* page 4, ligne 25 - page 7, ligne 14; figures 3, 4 * | 1 | A01G25/09 |
| Y | | 2 | |
| Y | DE-A-3114129 (PRADIFA PRAZISIONS DICHTUNGS)<br>* page 7, ligne 1 - page 8, ligne 21; figures 1, 2 * | 2 | |
| X | FR-A-2500260 (FERRANDEZ)<br>* page 7, ligne 15 - page 9, ligne 24; figure 4 * | 1 | |
| A | BE-A-694996 (I.V.PRESSURE CONTROLLERS)<br>* page 2, dernier alinéa - page 4, alinéa 1; figures 1, 2 * | 2 | |

DOMAINES TECHNIQUES
RECHERCHES (Int. Cl.5)

A01G
F16K

Le présent rapport a été établi pour toutes les revendications

| Lieu de la recherche | Date d'achèvement de la recherche | Examinateur |
|---|---|---|
| LA HAYE | 29 MAI 1990 | PERNEY Y. |

EPO FORM 1503 03.82 (P0402)